(19) Europäisches Patentamt
European Patent Office
Office européen des brevets

(11) Publication number: 0 188 353 B1

# (12) EUROPEAN PATENT SPECIFICATION

(45) Date of publication of patent specification: 06.03.91 (51) Int. Cl.5: C23F 11/14, E21B 41/02

(21) Application number: 86300181.4

(22) Date of filing: 14.01.86

## (54) Corrosion inhibitors.

(30) Priority: 14.01.85 US 691329

(43) Date of publication of application:
23.07.86 Bulletin 86/30

(45) Publication of the grant of the patent:
06.03.91 Bulletin 91/10

(84) Designated Contracting States:
DE FR GB IT NL

(56) References cited:
US-A- 3 459 710
US-A- 3 770 377
US-A- 3 932 296
US-A- 4 315 087

(73) Proprietor: THE DOW CHEMICAL COMPANY
2030 Dow Center Abbott Road P.O. Box 1967
Midland Michigan 48640-1967(US)

(72) Inventor: Martinez, Robert G.
113 Crocus
Lake Jackson Texas 77566(US)
Inventor: Treybig, Duane S.
226 Banyan Drive
Lake Jackson Texas 77566(US)
Inventor: Glass, Terry W.
409 Oyster Creek Court
Richwood Texas 77531(US)

(74) Representative: Raynor, John et al
W.H. Beck, Greener & Co 7 Stone Buildings
Lincoln's Inn
London WC2A 3SZ(GB)

EP 0 188 353 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention concerns new and useful corrosion inhibitors and in particular corrosion inhibitors which materially reduce the effects of attack of reactive materials on metals of construction.

In oil producing applications, metal tubing, sucker rods, valves, screens, coatings, pumps, and the like are subjected to the action of extremely corrosive fluids and gases. Such sweet and/or sour corrosive compositions can contain dissolved materials such as hydrogen sulfide, sulfur dioxide, carbon dioxide, oxygen, mineral acids, organic acids, and the like, as well as mixtures thereof.

Numerous processes for inhibiting the corrosion of metals caused upon exposure to corrosive oil and gas well fluids have been proposed. See, for example, U.S. Patents 2,643,977 and 3,077,454. Unfortunately, such processes are not effective under the conditions of high temperatures and pressures experienced by metal equipment in extremely deep oil and gas wells. Such conventional corrosion inhibitors can have a tendency to degrade, volatilize, or polymerize causing formation damage and/or inadequate corrosion protection.

In view of the deficiencies of the prior art, it would be highly desirable to provide a corrosion inhibitor which is easily prepared and can be effectively employed under very high temperature and pressure conditions.

The present invention concerns a new corrosion inhibitor composition comprising the thermally treated reaction product of (1) an $\alpha,\beta$-ethylenically unsaturated aldehyde and (2) an organic polyamine; wherein said thermal treatment is conducted at a temperature and for a time sufficient to provide an increase in thermal stability (as measured, for example, by differential scanning calorimetry) of at least about 25 °C as compared to the thermal stability of the oligomer or polymer product prior to said thermal treatment. The product will generally be allowed to cool after its preparation. The reaction product is optionally further reacted with (3) a compound or compounds containing a group or groups capable of undergoing a reaction, quaternization or neutralization with an amine.

In another aspect, the present invention provides a method for preventing the corrosion of a metal composition in contact with down hole well fluids, which comprises contacting the surface of said metal composition with an effective amount of the aforementioned corrosion inhibitor. The present invention provides corrosion protection to metal compositions exposed to corrosive gases and/or fluids at high temperatures and pressures, such as are experienced in deep oil and gas wells.

In another aspect, the present invention concerns a process for preparing an oligomer or polymer by first reacting (1) an $\alpha,\beta$-ethylenically unsaturated aldehyde and (2) an organic polyamine, which comprises the further step of heating the product at a temperature and for a time sufficient to provide an increase in thermal stability of at least about 25 °C as compared to the thermal stability of the product of the first reaction step. Preferably, the reaction of (1) and (2) above is carried out in an inert solvent and at a temperature between about 0 ° and 150 °C. The preferred molar ratio is polyamine (1) to aldehyde (2) of 1:0.5 to 1:1. Additionally, the reaction product of (1) and (2) above when desired can be further reacted with (3) a compound or compounds containing a group or groups capable of undergoing a reaction, quaternization or neutralization with an amine.

The corrosion inhibitors of the present invention act to protect metal compositions from corrosive effects of fluids and gases which are present in down hole well environments. Metal compositions typically include steel, iron, ferrous alloys, and other alloys of which typical sucker rods, valves and pumps are comprised.

The $\alpha,\beta$-ethylenically unsaturated aldehydes useful herein can be generally represented by the formula:

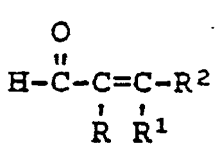

I

wherein each R, $R^1$ and $R^2$ are independently hydrogen, alkyl, aryl, aralkyl or substituted alkyl, aryl or aralkyl groups. Suitable substituents to the substituted alkyl, aryl or aralkyl groups include, for example, halo, alkoxy and amino groups. Examples of suitable $\alpha,\beta$-monoethylenically unsaturated aldehydes are disclosed in U.S. Patent 3,459,710. Other suitable aldehydes include, for example, furfuryl, acrolein, -bromo or -chloro cinnamaldehyde, and hexenal. The preferred $\alpha,\beta$-ethylenically unsaturated aldehyde is acrolein, or mixtures thereof with other aldehydes.

The organic polyamines of this invention can include those organic diamines of the type disclosed in the aforementioned U.S. Patent 3,459,710 as well as those polyamines disclosed in U.S. Patent 4,292,413.

Other polyamines include, for example, triethylenetetraamine, tetraethylenepentamine, pentaethylenehexamine, polyoxypropyleneamine, iminobispropylamine, aminoethylethanolamine, and the like as well as mixtures thereof. In addition, monofunctional amines that can be utilized include diglycolamines, dodecylamine, cocoamine, hexadecylamine, octadecylamine, tallowamine, and the like. Of the foregoing polyamines, those polyamines containing at least one primary amine are preferred; with those polyamines capable of forming imidazolidine or hexahydropyrimidine moieties or substituted moieties thereof being most preferred. Polyamines can be partially alkoxylated or partially polyalkoxylated so long as they contain at least one active amine hydrogen. Preferred polyamines are ethylenediamine and propylenediamine. Suitable polyamines also include the aminated polyoxyalkylene polyols.

The compounds comprising a functionality and/or functionalities capable of undergoing a reaction, quatermization or neutralization with an amine (i.e., substituent compounds) include, for example, compounds containing carboxylic acid moieties, organic halide moieties, epoxide moieties, and the like. For example, a carboxylic acid moiety can react with an amine to form a salt, amide or amidine-type linkage. Most preferably, substituent compounds include the polycarboxylic acids, organic polyhalides and polyepoxides. Such compounds are capable of introducing desired crosslinking to the product. Monocarboxylic acid compounds, organic monohalides and monoepoxide compounds can be employed. Examples of suitable carboxylic acids include acetic acid, benzoic acid, phthalic acid, terephthalic acid, octanoic acid, myristic acid, palmitric acid, oleic acid, isostearic acid, capric acid, caprylic acid, lauric acid, tall oil fatty acids, napthenic acids, dimer acids, trimer acids and similar mono- and poly- carboxylic acids. Other suitable acids are disclosed in U.S. Patent 4,339,349. Examples of suitable organic halides are disclosed in U.S. Patent 4,315,087. Examples of suitable mono- and polyexpoxides include epoxidized vegetable oils such as epoxidized linseed oil, epoxidized carboxylic acids such as epoxidized oleic acid, the glycidyl ethers, and the like. Other suitable epoxide compounds are disclosed in U.S. Patent 4,292,413. Other suitable compounds having a functionality or functionalities capable of undergoing a reaction, quaternization or neutralization with an amine include, for example, inorganic acids, aldehydes, alkylene oxides, cyanides, nitriles, sulfur containing compounds such as mercaptans, and the like. Preferably, the substitutent compound has a predominantly hydrophobic character.

Products used in this invention are preferably prepared by first reacting the organic polyamine with the $\alpha,\beta$-ethylenically unsaturated aldehyde. Preferably, the reaction is carried out in an inert solvent and at a temperature between about 0 °C and about 150 °C. The choice of inert solvent is generally dependent upon the boiling point of the polyamine, the solubility of the polyamine and the solubility of the resulting oligomer or polymer. Advantageously, the solvent is one in which both the monomers and resultant oligomer are soluble. Suitable solvents include methanol, ethanol, butanol, benzene, water, dioxane, dimethylformamide, tetrahydrofuran, and the like.

Preferably one mole of polyamine is reacted with 0.5 to 1.0 mole of unsaturated aldehyde. Preferably, the organic polyamine is dissolved in a suitable solvent in a reaction vessel. A solution of the unsaturated aldehyde and suitable solvent is then reacted with the polyamine solution, preferably in a slow manner. The reaction mixture can be cooled or heated. Solvent can be removed by distillation. Preferably, a solvent, such as isopropanol can be added to the reaction mixture in order to create an azeotropic mixture for removing solvent and by-product.

Oligomer or polymer products usually have an average molecular weight less that about 1,000 and are obtained from the reaction of $\alpha,\beta$-ethylenically unsaturated aldehydes with organic polyamines. The oligomers or polymers within the scope of this invention comprise compounds that can comprise vinyl, imine, enamine, ether, and hydroxyl functional groups. The reaction of an amine containing piperazine rings with an $\alpha,\beta$-ethylenically unsaturated aldehyde introduces piperazine rings into the constituents of the product. The reaction of the carbonyl of $\alpha,\beta$-monoethylenically unsaturated aldehyde with a primary amine forms an imine which readily cyclizes if labile (where the term "labile" is as defined in U.S. Patent 4,315,087) amine hydrogens are available, preferably in the $\gamma$ or $\delta$ position relative to the nitrogen of the imine. An imidazolidine ring is formed from the reaction of the carbonyl of an $\alpha,\beta$-monoethylenically unsaturated aldehyde with an ethylenepolyamine while a hexahydropyrimidine ring is formed from the reaction of the carbonyl of an $\alpha,\beta$-monoethylenically unsaturated aldehyde with a propylenepolyamine. Some of the possible constituents of the oligomers formed from the reaction of, for example, acrolein with ethylenediamine are believed to be represented by the following structures:

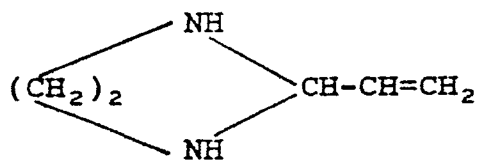

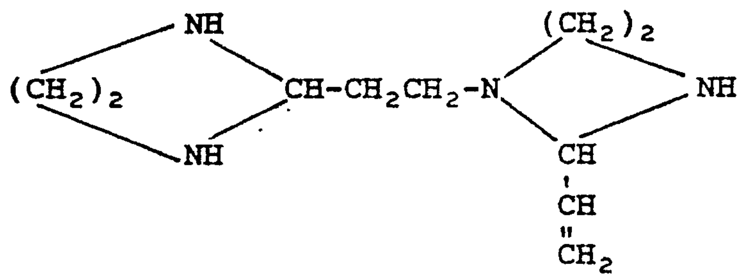

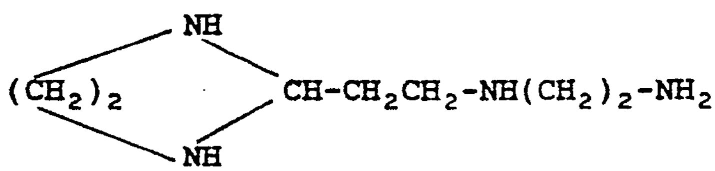

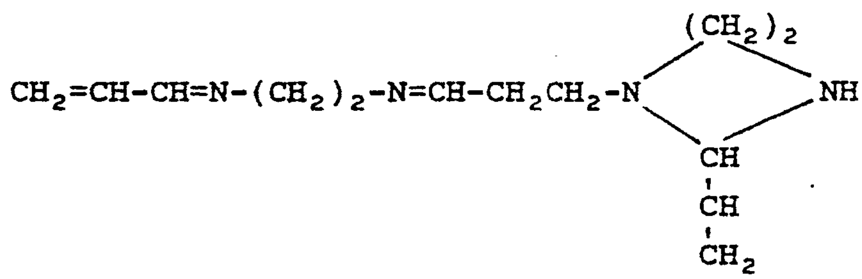

and

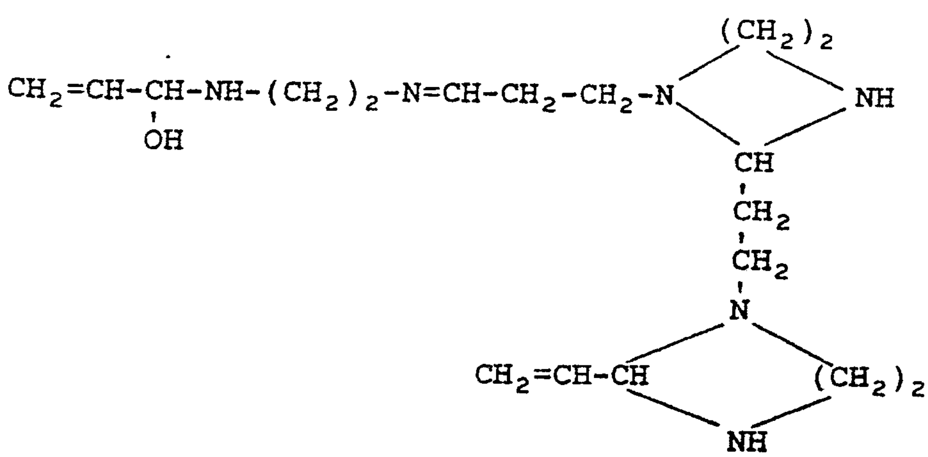

The thermal treatment is usually conducted by heating the oligomer or polymer from the reaction of $\alpha,\beta$-ethylenically unsaturated aldehyde with an organic polyamine while stirring in air or an inert atmosphere such as, for example, nitrogen, helium, neon, zenon, argon, mixtures thereof and the like. The temperature required to achieve the increase in thermal stability depends upon the particular oligomer or polymer being treated. However, a temperature of at least 180 °C, preferably from about 190 °C to about 350 °C is required. In some instances, lower temperatures could produce the desired increase in thermal stability.

The oligomer or polymer is heated for a period of time to sufficiently rearrange the original oligomers or polymers such that the resultant product has an increase in thermal stability of at least 25 °C above that of the product prior to heat treatment. The period of time in which the oligomer or polymer is heated can range from about 10 minutes to about 48 hours. The preferred period of time for thermally rearranging the oligomer or polymer is 30 minutes to 2 hours. In the case where the oligomer or polymer results from the reaction of acrolein with an ethylenepolyamine, pyridines and pyrazines having methyl substituents are formed and are evolved or reside with the final product. Generally, the thermally rearranged oligomer or polymer is more thermally stable than the original oligomer or polymer. The preferred atmosphere for stirring the oligomer or polymer during thermal rearrangement is nitrogen.

The product which is isolated optionally can be contacted with the compound comprising a functionality or functionalities capable of undergoing a reaction, quaternization or neutralization with an amine. The previously described product is dissolved or dispersed in a suitable solvent and contacted with the substituent compound which is also dissolved in a suitable solvent. The amount of substituent compound which is employed can vary such that about 1 to about 100 percent of the available amino hydrogens of the polyamine/unsaturated aldehyde product can be reacted with reactive functionalites of the substituent compound. This resulting product can, if desired, be isolated using techniques such as distillation to remove by-products and solvent.

The resulting thermally treated product can be employed as a corrosion inhibitor, such as those corrosion inhibitor formulations known in the art. For example, when desired the product can be dispersed or dissolved in a suitable carrier, liquid or solvent such as water, alcohols, aromatic and aliphatic hydrocarbons, and the like, or mixtures thereof. Other additives include demulsifiers, water wetting agents, surfactants, viscosifiers, commingled gases, defoamers, other corrosion inhibitors such as polymeric materials and salts, organic and inorganic acids, iron control agents, sequestering and/or chelating agents, phosphates, quaternaries, amine salts, and the like. For example, surface active agents are used to assure complete dispersion of active ingredients throughout the corrosion inhibitor composition and thus provide a better contact of the corrosion inhibitor with the surface of the metal compound which is being protected. The corrosion inhibitors of this invention form films on metal surfaces at least as readily as those known film forming corrosion inhibitors.

The corrosion inhibitor of this invention is employed in a functionally effective amount. That is, any quantity of corrosion inhibitor which will provide some degree of inhibition of corrosion is sufficient. Typical amounts of corrosion inhibitor which are employed in an oil and/or gas well treatment can range from about 5 to about 2,000 ppm for continuous treatment or about 1,000 to about 50,000 ppm for squeeze treatment, based on the weight of corrosive well fluids in contact with the metal compositions which are protected. Amounts of corrosion inhibitor in excess of 50,000 ppm can provide additional corrosion inhibition but at increased expense.

The corrosion inhibitors of this invention are highly stable to high temperatures and high pressures. Typically, corrosion inhibitors are employed in applications where temperatures range from about 100 °F (about 40 °C) to in excess of about 500 °F (about 260 °C), depending upon the composition of the polymer product. The corrosion inhibitors of this invention are especially useful at temperatures ranging from about 300 °F (about 150 °C) to about 450 °F (about 230 °C).

The corrosion inhibitors of this invention inhibit corrosion to metal compositions used in down hole applications, preferably in excess of 80 percent corrosion protection. The corrosion inhibitors advantageously inhibit corrosion to metal compositions at elevated temperatures exceeding about 250 °F (about 120 °C) in oil and gas well applications. Useful applications include oil and/or gas well drilling, completion, workover, stimulation, transfer, processing and storage applications.

The following examples are presented to further illustrate, but not limit, the scope of this invention.

## EXAMPLE 1

### A. PREPARATION OF ACROLEIN/ETHYLENEDIAMINE OLIGOMER AT A MOLAR RATIO OF 1/1 RESPECTIVELY

Acrolein is distilled in the presence of 358 ppm and 379 ppm of hydroquinone in the boiling and receiving flasks, respectively. A solution of distilled acrolein was prepared by mixing 282.1 grams (g) (5 moles) acrolein with about 155 g methanol.

Into a reactor equipped with stirrer, thermometer, condensor, and addition funnel with nitrogen inlet tube

was placed a solution of 300 g (5 moles) ethylenediamine and about 510 g methanol. The reactor contents were stirred under nitrogen atmosphere while being held at a temperature of about 4° C.

The acrolein solution was added to the reactor over a period of 160 minutes (9600 s) at such a rate that the rise in temperature did not exceed 23° C. The mixture was subjected to rotary evaporation at 100° C. An amount of isopropanol was added to the mixture and said mixture was again subjected to rotary evaporation at 100° C. The product was a yellowish viscous liquid.

B. THERMAL TREATMENT OF OLIGOMER

Into a one liter reactor equipped with a condensing assembly, stirrer, thermometer, addition funnel, and nitrogen inlet tube was placed 210 g of the oligomer product from A above. The condensing assembly consisted of a Dean Stark trap, cold water condenser and dry ice-acetone cold finger. The reactor contents were stirred under nitrogen atmosphere at 125° C for 60 minutes (3600 s). Then the reactor contents were heated at 10° C increments at 60 minute intervals up to 250° C. Overhead and bottom samples were caught at each 10° C interval.

Infrared spectra of the bottom sample indicated the oligomer product had undergone thermal rearrangement. The infrared spectra at 125° C showed bands at 1655, 1630 and 1600 $cm^{-1}$. The band at 1655 $cm^{-1}$ was assigned to C=N stretch. The absorption at 1630 $cm^{-1}$ was attributed to C=C stretch. The absorption at 1655 and 1630 $cm^{-1}$ increased upon heating the polymer product up to 190° C. Above 190° C, the band at 1600 $cm^{-1}$ was the predominant absorption of the three bands.

The infrared spectra at 125° C also showed absorption bands at 3270, 2940, 2800, 1260 and 900 $cm^{-1}$. The absorption band at 3270 $cm^{-1}$ was assigned to N-H stretching vibration of a secondary amine. Above 190° C a broad absorption band at 3400 $cm^{-1}$ replaced the 3270 $cm^{-1}$ band. The absorption bands at 2940 and 2800 $cm^{-1}$ were assigned to C-H stretch. At 125° C, these bands were of similar intensity. Above 190° C, the band at 2940 $cm^{-1}$ was slightly more intense than the band at 2800 $cm^{-1}$. Above 190° C, the absorptions at 1260 and 900 $cm^{-1}$ disappeared.

Overhead samples collected in the Dean Stark trap were analyzed by electron impact mass spectroscopy. Methylpyridine was identified only in overhead samples collected at and above 135° C. Ethanamine, pyrazine, methylpyrazine, ethylpyrazine, dimethylpyridine, ethylpyridine, trimethylpyridine, and ethylmethylpyridine were identified along with methylpyridine in the overhead fraction collected at 250° C.

The reactor bottom samples were analyzed with methane chemical ionization probe mass spectroscopy. $[M+1]^+$ fragments corresponding to the molecular weight of methylpyridine were observed only in the bottom samples collected at and above 170° C. $[M+1]^+$ fragments corresponding to the molecular weights of $C_2$-pyrazine, $C_3$-pyrazine, $C_4$-pyrazine and $C_5$-pyrazine were present in addition to that corresponding to methylpyridine in the bottom samples collected at and above 180° C. The bottom sample collected at 250° C was a dark brown hard solid at room temperature that had a distinct pyridine odor.

The number average molecular weight (Mn) and weight average molecular weight (Mw) of the thermally treated product was determined by gel permeation chromatography with methanol as the eluent. Monoethylene glycol and E-200 polyglycol served as standards. Between 125°-190° C, the Mn varied between 196-235 and the Mw varied between 394-423. Between 200°-250° C, the Mn varied between 100-130 and Mw varied between 234-280.

EXAMPLE 2

A. PREPARATION OF ACROLEIN/MIXTURE OF TETRAETHYLENEPEN TAMINE, PENTAETHYLENEHEXAMINE, HEXAETHYLENEHEPTAMINE OLIGOMER

Into a jacketed reactor equipped with a mechanical stirrer, thermometer, condenser, and addition funnel is placed a solution containing 771 grams (3.15 moles) of a polyalkylene polyamine product having an average molecular weight higher than tetraethylenepentamine (commercially available from The Dow Chemical Company as Ethyleneamine E-100) and 495 grams of anhydrous methanol. The reactor contents were stirred under nitrogen atmosphere while cooled to 3° C. A solution of distilled acrolein was prepared by mixing 282 grams (5.03 moles) of acrolein with 323 grams of anhydrous methanol. The acrolein solution was added to the reactor using an addition funnel over a period of 250 minutes (15000 s). After reaction completion, the mixture was subjected to rotary evaporation at 100° C. An amount of isopropanol was

added to the mixture and again subjected to rotary evaporation. The resultant product was an amber colored viscous liquid.

## B. THERMAL TREATMENT OF OLIGOMER

Into a one liter reactor equipped with a condenser assembly, mechanical stirrer, nitrogen inlet tube, and thermometer was placed 139 grams of the oligomer product from A above. The condenser assembly consisted of a Dean Stark trap and chilled glycol condenser. The reactor contents were stirred under the nitrogen atmosphere at 100° C for 1 hour (3600 s). The reactor contents were heated incrementally at 60 minute intervals to 350° C. Overhead and bottom samples were caught at each interval.

Overhead samples collected in the Dean Stark trap were analyzed by electron impact mass spectroscopy. Methylpyridine, ethylpyridine, dimethylpyridine and methylethylpyridine were identified in the overhead fractions collected between 150° and 300° C. Methylpyridine was the most concentrated of these constituents. Dimethylpyrazine, methylethylpyrazine and $C_4$-pyrazine were identified in the overhead fractions collected at and above 300° C.

## EXAMPLE 3

## THERMAL STABILITY

The thermal stability of the products of this invention were determined by differential scanning calorimetry (DSC) scan of various samples using a DuPont Model 1090 Thermoanalyzer. In the differential scanning calorimetry analysis, the samples were placed in an aluminum pan and programmed from 25° to 500° C at 10° C/min. with a nitrogen purge. The samples tested were the thermally rearranged acrolein/ethylenediamine oligomers and the acrolein/mixture of tetraethylenepentamine, pentaethylenehexamine and hexaethyleneheptamine oligomers prepared as described in Examples 1 and 2, respectively. Results for the thermally rearranged acrolein/ethylenediamine oligomers prepared in Example 1 are given in Table 1.

**TABLE I**

| Thermal Treatment Temperature | Initial Decomposition DSC |
|---|---|
| NONE* | 200°C |
| 125* | 160°C |
| 135* | 150°C |
| 160* | 200°C |
| 170* | 210°C |
| 180 | 280°C |
| 250 | 300°C |

*Not an example of this invention.

Results for the thermally rearranged acrolein/mixture of tetraethylenepentamine, pentaethylenehexamine, and hexaethyleneheptamine oligomers as prepared in Example 2 are given in Table II.

TABLE II

| Thermal Treatment Temperature | Initial Decomposition DSC |
|---|---|
| NONE* | 150°C |
| 100* | 160°C |
| 110* | 160°C |
| 140* | 160°C |
| 160* | 170°C |
| ~~180*~~ | ~~150°C~~ |
| 240 | 250°C |
| 250 | 250°C |
| 280 | 230°C |
| 300 | 200°C |
| 325 | 220°C |
| 350 | 220°C |

*Not an example of this invention.

EXAMPLE 4

CORROSION TESTING, 175° F (79.4° C)

The thermally treated products from Examples 1B and 2B were tested for their corrosion inhibition properties by the following procedure.

Corrosion inhibition of various samples was determined under conditions which simulate conditions that exist in oil and gas wells as follows. A brine solution containing 89.89 percent deionized water, 9.62 percent sodium chloride, 0.305 percent calcium chloride and a 0.186 percent hydrated magnesium chloride complex was prepared. This brine solution was saturated under carbon dioxide purge until a pH of 3.8 was achieved. The solution was treated with sodium persulfate to remove oxygen. The desired corrosion inhibitor was added to the solution. About 720 milliliters (ml) of this brine solution and 80 ml of kerosene treated with sodium persulfate were charged into a 32-ounce bottle. To this charge was added enough hydrated sodium sulfide to generate a suitable amount of hydrogen sulfide (i.e., about 300 ppm hydrogen sulfide based on total fluids).

Metal coupons of 1020 carbon steel were degreased with an inhibited methylchloroform, acidized with 16 percent hydrochloric acid, washed and dried. Each coupon weighed about 19 g. A metal coupon was placed in the bottle containing the brine, kerosene and ingredients as previously described. The bottle was capped and acetic acid was injected into the bottle through a septum. The bottle was placed on a vertically rotating wheel held at 175° F (79.3° C) and the sample was rotated at 26 rpm for 24 hours (86400 s). The coupons were removed from the bottle, cleaned, washed, dried and reweighed and the percent protection afforded them by the inhibitor is calculated as the percent protection by the following formula:

$$\text{percent protection} = 100 - \frac{\text{inhibitor coupon wt. loss}}{\text{blank coupon wt. loss}} \times 100$$

The weight loss is given to the nearest whole percent. The tests wherein no inhibitor is employed are for comparative purposes and are designated as blanks.

The corrosion rates are also determined in millinches per year (mpy) corrosion rates by the following formula:

$$\text{mpy} = \frac{534\ (\text{Mg Weight Loss of Coupon})}{d \times a \times t}$$

d = density of 1020 carbon steel = 7.86 g/ml
a = surface area (in.) of metal coupons
t = test time in hours
1 mil = $25.4 \times 10^{-3}$ mm

The amount of corrosion of untreated coupons was compared to coupons which were tested in the presence of 100 ppm of each corrosion inhibitor sample. Results are presented in Table III for the thermally rearranged acrolein/ethylenediamine oligomers prepared in Example 1-B.

TABLE III

| INHIBITOR | | | | |
|---|---|---|---|---|
| Product From Heat Treatment at Indicated Temperature °C | Concentration ppm | Weight Loss grams | Percent Protection | MPY** |
| No Inhibitor* | 0 | 0.1879 | 0 | 71.0 |
| No Heat Treatment* | 100 | 0.0351 | 81.3 | 13.3 |
| 125* | 100 | 0.0357 | 81.0 | 13.9 |
| 135* | 100 | 0.0402 | 78.6 | 15.7 |
| 150* | 100 | 0.0344 | 81.7 | 13.9 |
| 162* | 100 | 0.0325 | 82.7 | 12.5 |
| 170* | 100 | 0.0261 | 86.1 | 10.8 |
| 180 | 100 | 0.0381 | 83.2 | 13.0 |
| 190 | 100 | 0.0477 | 74.6 | 16.8 |
| 200 | 100 | 0.0309 | 83.6 | 12.6 |
| 250 | 100 | 0.0423 | 77.5 | 14.8 |

*Not an example of this invention.
**MPY is mils per year.

Results are presented in Table IV for the thermally rearranged acrolein/mixture of tetraethylenepentamine, pentaethylenehexamine, and hexaethyleneheptamine oligomers prepared in Example 2-B.

TABLE IV

| INHIBITOR Product From Heat Treatment at Indicated Temperature °C | Concentration ppm | Weight Loss grams | Percent Protection | MPY** |
|---|---|---|---|---|
| No Inhibitor* | 0 | 0.2804 | 0 | 109.8 |
| No Heat Treatment* | 100 | 0.0394 | 81.2 | 15.2 |
| 100* | 100 | 0.0720 | 74.3 | 28.0 |
| 110* | 100 | 0.0621 | 77.9 | 24.1 |
| 140* | 100 | 0.0862 | 69.3 | 33.5 |
| 160* | 100 | 0.0844 | 69.9 | 32.7 |
| No Inhibitor* | 0 | 0.2439 | 0 | 93.7 |
| 180 | 100 | 0.0389 | 84.1 | 15.0 |
| 192 | 100 | 0.0328 | 86.6 | 12.7 |
| 250 | 100 | 0.0257 | 89.5 | 9.9 |
| No Inhibitor* | 0 | 0.2412 | 0 | 92.6 |
| 280 | 100 | 0.0687 | 71.5 | 26.6 |
| 300 | 100 | 0.0490 | 79.7 | 19.1 |
| 325 | 100 | 0.0388 | 83.9 | 15.1 |
| 350 | 100 | 0.0446 | 81.5 | 17.0 |

*Not an example of this invention.
**MPY is mils per year.

EXAMPLE 5

PREPARATION OF ACROLEIN/ETHYLENEDIAMINE/WESTVACO DIACID 1550

Acrolein/ethylenediamine oligomers thermally rearranged at 250 °C (49.99 g) from example 1-B, Westvaco Diacid 1550 (76.91 g) and isopropanol (126.27 g) were weighed into a one liter 5 neck round bottom flask equipped with a condensing assembly, stirrer, thermometer and nitrogen inlet tube. The reactor contents were refluxed at 82 °C for 1 hour (3600 s). A barrett trap was attached to the reactor. One hour and eleven minutes (4260 s) later, all isopropanol had been removed by using the barrett trap. The reactor contents were heated at 210 °C for 2 hours 19 minutes (8340 s). Reactor contents (121.02 g) were cooled to less than 60 °C and then dissolved in isopropanol (196.45 g). This isopropanol solution was refluxed at 82 °C for 1 hour and 10 minutes (4200 s).

EXAMPLE 6

PREPARATION OF ACROLEIN/ETHYLENEDIAMINE/1-BROMOOCTADECANE

Acrolein/ethylenediamine oligomers thermally rearranged at 250° C (23.06 g) from Example 1-B, and 1-bromooctadecane (66.74 g) were weighed into a 500 ml resin kettle equipped with a condensing assembly, stirrer, thermometer and nitrogen inlet tube. The reactor contents were heated at 90° C for 15 minutes (900 s) and then cooled to room temperature. 150 ml xylene (181.54 g) was added to reactor contents. Reactor contents were maintained at 75° C for 35 minutes (2100 s). Reactor contents were heated between 60° - 110° C for 2 additional hours (7200 s).

EXAMPLE 7

PREPARATION OF ACROLEIN/TETRAETHYLENE PENTAMINE, PENTAETHYLENE HEXAMINE, HEXAETHYLENE HEPTAMINE/1-BROMO OCTADECANE

Acrolein/mixture of 14 area percent tetraethylenepentamine, 42 area percent pentaethylenehexamine and 27 area percent hexaethyleneheptamine oligomers thermally rearranged at 250° C (20.8 grams) from Example 2-B, 1-bromooctadecane (74.1 grams) and isopropanol (31.6 grams) were weighed into a reactor of the type described in Example 7. Area percent was determined by gas chromatography. The reactor contents were stirred at 82.5° C for one hour (3600 s). Isopropanol was removed at 90° C by using a Dean Stark trap.

EXAMPLE 8

CORROSION TESTING

The corrosion inhibitors prepared in Examples 5, 6 and 7 were tested employing the procedure of Example 4. The results are given in Table V.

TABLE V

| INHIBITOR | Concentration ppm | Weight Loss grams | Percent Protection | MPY |
|---|---|---|---|---|
| None* | 0 | 0.2725 | 0 | 105.2 |
| Example 5 | 100 | 0.0328 | 88 | 12.3 |
| Example 6 | 100 | 0.0281 | 90 | 10.8 |
| None* | 0 | 0.1700 | 0 | 65.5 |
| Example 7 | 100 | 0.0178 | 89.5 | 6.8 |

*Not an example of this invention.

The data in Table V demonstrates that thermally rearranged α,β-unsaturated aldehyde/amine oligomers reacted with a fatty carboxylic acid or organic halide exhibits excellent corrosion protection under simulated down hole tests at 175° F.

EXAMPLE 9

CORRODSION TESTING, 350° F (177° C)

The performance of 100 ppm of a corrosion inhibitor sample also was tested in a 24 hour 350° F (177° C) wheel test containing 90 percent brine/8 percent heptane/-2 percent kerosene at 2,000 psi pressure (25° C) with 10 percent hydrogen sulfide, 10 percent carbon dioxide and 80 percent methane in a stainless steel pipe bomb. Results are presented in Table VI for the corrosion inhibitors prepared in Examples 5, 6 and 7.

TABLE VI

| Inhibitor | Concentration ppm | Weight Loss grams | Percent Protection | MPY |
|---|---|---|---|---|
| None | 0 | 0.1443 | 0 | 135.0 |
| Example 5 | 100 | 0.0382 | 74 | 35.7 |
| Example 6 | 100 | 0.0311 | 79 | 29.1 |
| Example 7 | 100 | 0.0289 | 80 | 27.0 |

The data in Table VI demonstrates that thermally rearranged α,β-unsaturated aldehyde/amine oligomers reacted with a fatty carboxylic acid or organic halide exhibits good corrosion protection under simulated down hole tests at 350° F.

## Claims

1. A corrosion inhibitor as prepared by heat treating the reaction product of
   (A) alpha beta-ethylenically unsaturated aldehyde, and
   (B) an organic polyamine; sufficiently to improve the thermal stability thereof by means of thermal rearrangement, wherein the said heat treatment comprises heating the said reaction product to a temperature of from 180° C to 350° C for a period of from 10 minutes to 48 hours, such that the thermal stability of the corrosion inhibitor (as measured by differential scanning calorimetry) is increased by at least 25° C.

2. The corrosion inhibitor of Claim 1 wherein the polyamine forms imidazolidine moieties or hexahydropyrimidine moieties, or substituted moieties thereof.

3. The corrosion inhibitor of Claim 1 or Claim 2 wherein the polyamine is a partially ethoxylated or a partially polyethoxylated polyamine or an aminated polyoxyalkylene polyol.

4. The corrosion inhibitor of any one of the preceding claims wherein the alpha beta-ethylenically unsaturated aldehyde is

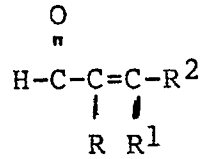

wherein each R, $R^1$ and $R^2$ are independently hydrogen, alkyl, aryl, aralkyl or substituted aklyl, aryl or aralkyl groups.

5. The corrosion inhibitor of any one of the preceding claims wherein the aldehyde is acrolein and the polyamine is ethylenediamine.

6. The corrosion inhibitor of Claim 5 wherein said aldehyde is acrolein and said polyamine is a mixture of tetraethylenepentamine, pentaethylenehexamine and hexaethyleneheptamine.

7. The corrosion inhibitor of any one of the preceding claims, wherein the available amino hydrogens of the thermally treated product are further reacted with at least one compound containing a carboxylic acid, organic halide or organic epoxide group.

8. The corrosion inhibitor of Claim 7 wherein said carboxylic acid is a liquid monocyclic dicarboxylic acid of 21 to 24 carbon atoms.

9. The corrosion inhibitor of Claim 7 wherein said organic halide is 1-bromooctadecane.

10. The corrosion inhibitor of any one of the preceding claims, further comprising a carrier, that is water, an alcohol or an aromatic or aliphatic hydrocarbon.

11. A method for preventing the corrosion of a metal composition in contact with a well fluid, comprising contacting the surface of said metal composition with an effective amount of a composition as claimed in any one of Claims 1 to 10.

12. The method of Claim 11 wherein said effective amount of corrosion inhibitor is 5 to 2,000ppm, based on the weight of said well fluid in contact with said metal composition.

13. The use of a corrosion inhibitor as claimed in any one of Claims 1 to 10, for the inhibition of corrosion in a well.

## Revendications

1. Un inhibiteur de corrosion tel que préparé par un traitement thermique du produit de réaction de
(A) un aldéhyde à insaturation alpha,bêta-éthylénique, et
(B) une polyamine organique;
suffisant pour améliorer la stabilité thermique dudit produit au moyen d'un réarrangement thermique, ledit traitement thermique comprenant le chauffage dudit produit réactionnel à une température comprise entre 120 et 350 °C pendant une durée de 10 minutes à 48 heures, de façon à faire augmenter, d'au moins 25 °C, la stabilité thermique de l'inhibiteur de corrosion (telle que mesurée par calorimétrie différentielle à balayage).

2. L'inhibiteur de corrosion de la revendication 1, dans lequel la polyamine forme des fragments imidazolidine ou des fragments hexahydropyrimidine ou des fragments substitués dérivés de ceux-ci.

3. L'inhibiteur de corrosion de la revendication 1 ou de la revendication 2, dans lequel la polyamine est une polyamine partiellement éthoxylée ou partiellement polyéthoxylée, ou un polyoxyalkylène polyol aminé.

4. L'inhibiteur de corrosion de l'une quelconque des revendications précédentes, dans lequel l'aldéhyde à insaturation alpha,bêta-éthylénique est

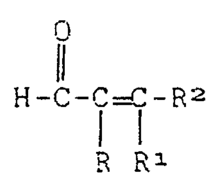

dans lequel chacun des R, $R^1$ et $R^2$ est, indépendamment des autres, un atome d'hydrogène, un groupement alkyle, aryle, arylalkyle ou un groupement alkyle, aryle ou arylalkyle substitué.

5. L'inhibiteur de corrosion de l'une quelconque des revendications précédentes, dans lequel l'aldéhyde est l'acroléine et la polyamine est l'éthylènediamine.

6. L'inhibiteur de corrosion de la revendication 5, dans lequel ledit aldéhyde est l'acroléine et ladite polyamine est un mélange de tétraéthylènepentamine, pentaéthylènehexamine et hexaéthylèneheptamine.

7. L'inhibiteur de corrosion de l'une quelconque des revendications précédentes, pour lequel on fait de plus réagir les atomes d'hydrogène disponibles des groupes amino du produit traité thermiquement avec au moins un composé contenant un groupement acide carboxylique, halogénure organique ou époxyde organique.

8. L'inhibiteur de corrosion de la revendication 7, pour lequel ledit acide carboxylique est un acide dicarboxylique monocyclique liquide comportant 21 à 24 atomes de carbone.

9. L'inhititeur de corrosion de la revendication 7, pour lequel ledit halogénure organique est le 1-bromooctadécane.

10. L'inhibiteur de corrosion de l'une quelconque des revendications précédentes, comprenant de plus un véhicule, qui est l'eau, un alcool ou un hydrocarbure aromatique ou aliphatique.

11. Un procédé pour empêcher la corrosion d'une composition métallique en contact avec un fluide de puits, comprenant la mise en contact de la surface de ladite composition métallique avec une quantité efficace d'un inhibiteur de corrosion tel que revendiqué dans l'une quelconque des revendications 1 à 10.

12. Le procédé de la revendication 11, dans lequel ladite quantité efficace d'inhibiteur de corrosion est de 5 à 2000 ppm, rapportée au poids dudit fluide de puits en contact avec ladite composition métallique.

13. L'utilisation d'un inhibiteur de corrosion tel que revendiqué dans l'une quelconque des revendications 1 à 10. pour l'inhibition de la corrosion dans un puits.

**Ansprüche**

1. Korrosionshemmstoff, wie hergestellt durch Hitzebehandlung des Reaktionsprodukts aus
   (A) alpha, beta-ethylenisch ungesättigtem Aldehyd und
   (B) einem organischen Polyamin, die ausreichend ist, um die thermische Stabilität davon mittels thermischer Umlagerung zu verbessern, worin die Hitzebehandlung das Erhitzen des Reaktionsprodukts auf eine Temperatur von 180° C bis 350° c für eine Dauer von 10 Minuten bis 48 Stunden umfaßt, so daß die thermische Stabilität des Korrosionshemmstoffs (gemessen durch differentielle Scanning Kalorimetrie) um mindestens 25° C erhöht wird.

2. Korrosionshemmstoff nach Anspruch 1, worin das Polyamin Imidazolingruppen oder Hexahydropyrimidingruppen oder substitiuierte Gruppen davon bildet.

3. Korrosionshemmstoff nach Anspruch 1 oder 2, worin das Polyamin ein partiell ethoxyliertes oder ein partiell ` polyethoxyliertes Polyamin oder ein aminiertes Polyoxyalkylenpolyol ist.

4. Korrosionshemmstoff nach einem der vorhergehenden Ansprüche, worin der alpha, beta-ethylenisch ungesättigte Aldehyd

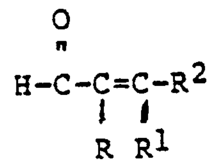

ist, worin R, $R^1$ und $R^2$ jeweils unabhängig Wasserstoff, Alkyl, Aryl, Aralkyl oder substituierte Alkyl, Aryl oder Aralkyl-Gruppen sind.

5. Korrosionshemmstoff nach einem der vorhergehenden Ansprüche, worin der Aldehyd Acrolein ist und das Polyamin Ethylendiamin ist.

6. Korrosionshemmstoff nach Anspruch 5, worin der Aldehyd Acrolein ist und das Polyamin ein Gemisch aus Tetraethylenpentamin, Pentaethylenhexamin und Hexaethylenheptamin ist.

7. Korrosionshemmstoff nach einem der vorhergehenden Ansprüche, worin die verfügbaren Amin-Wasserstoffe des thermisch behandelten Produkts weiter mit mindestens einer Verbindung umgesetzt werden, die eine Carbonsäure-, organische Halogenid- oder organische Epoxidgruppe enthält.

8. Korrosionshemmstoff nach Anspruch 7, worin die Carbonsäure eine flüssige monocyclische Dicarbonsäure mit 21 bis 24 Kohlenstoffatomen ist.

9. Korrosionshemmstoff nach Anspruch 7, worin das organische Halogenid 1-Bromoctadecan ist.

10. Korrosionshemmstoff nach einem der vorhergehenden Ansprüche, weiterhin enthaltend einen Träger, der Wasser, ein Alkohol oder ein aromatischer oder aliphatischer Kohlenwasserstoff ist.

11. Verfahren zum Verhindern der Korrosion einer Metall-Zusammensetzung in Kontakt mit einer Brunnenflüssigkeit, umfassend das Kontaktieren der Oberfläche der Metall-Zusammensetzung mit einer wirksamen Menge einer Zusammensetzung nach einem der Ansprüche 1 bis 10.

12. Verfahren nach Anspruch 11, worin die wirksame Menge des Korrosionshemmstoffes 5 bis 2000 ppm auf Basis des Gewichts der Brunnenflüssigkeit ist, die in Kontakt mit der Metall-Zusammensetzung steht.

13. Verwendung eines Korrosionshemmstoffes nach einem der Ansprüche 1 bis 10 zur Hemmung von Korrosion in einem Brunnen.